(19) **Europäisches Patentamt / European Patent Office / Office européen des brevets**

(11) **EP 4 733 801 A1**

(12) **DEMANDE DE BREVET EUROPEEN**

(43) Date de publication:
**29.04.2026 Bulletin 2026/18**

(21) Numéro de dépôt: **25210664.6**

(22) Date de dépôt: **23.10.2025**

(51) Classification Internationale des Brevets (IPC):
**G01S 7/41** *(2006.01)*    **G01S 7/292** *(2006.01)*
**G01S 13/20** *(2006.01)*    **G01S 13/22** *(2006.01)*
**G01S 13/42** *(2006.01)*    **G01S 13/933** *(2020.01)*
**G01S 13/24** *(2006.01)*    *G01S 13/02 (2006.01)*

(52) Classification Coopérative des Brevets (CPC):
**G01S 7/414; G01S 7/2923; G01S 13/20;**
**G01S 13/227; G01S 13/24; G01S 13/426;**
**G01S 13/933;** G01S 2013/0245; G01S 2013/0272

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **25.10.2024 FR 2411679**

(71) Demandeur: **THALES**
**92190 Meudon (FR)**

(72) Inventeurs:
• **GOY, Philippe**
**33700 MERIGNAC (FR)**
• **COTTRON, Rodolphe**
**33700 MERIGNAC (FR)**
• **KEMKEMIAN, Stéphane**
**33700 MERIGNAC (FR)**

(74) Mandataire: **Lavoix**
**2, place d'Estienne d'Orves**
**75441 Paris Cedex 09 (FR)**

(54) **PROCÉDÉ DE FONCTIONNEMENT D'UN RADAR DE DÉTECTION DE CIBLES EN MODE DE SURVEILLANCE MARITIME ET RADAR DE DÉTECTION ASSOCIÉ**

(57) La présente invention concerne un procédé de fonctionnement d'un radar de détection de cibles en mode de surveillance maritime ;

le procédé comprenant une étape (140) de détermination d'un niveau de fausses alarmes dans chaque secteur géographique ;

le procédé comprenant en outre pour chaque secteur géographique, la mise en œuvre de plusieurs récurrences d'une étape (110) d'émission/réception de signaux d'un type choisi parmi des ondes simples et des ondes communalisées, en fonction du niveau de fausses alarmes déterminé pour au moins l'un des secteurs géographiques ;

chaque onde communalisée comprenant au moins deux impulsions consécutives associées à des directions d'émission différentes et/ou à des fréquences différentes, et émises dans des bandes fréquentielles différentes ;

chaque onde simple comprenant une seule impulsion.

FIG.2

**Description**

La présente invention concerne un procédé de fonctionnement d'un radar de détection de cibles en mode de surveillance maritime.

La présente invention concerne également un radar de détection mettant en œuvre un tel procédé.

Le domaine technique de l'invention est celui des systèmes radar embarqués par exemple à bord des aéronefs, des bateaux, des sous-marins ou des satellites, mettant en œuvre une détection/identification de cibles en mode de surveillance maritime.

La problématique générale résolue par l'invention consiste à remédier à l'effet stroboscopique des fronts de vague pour réadapter les traitements d'extraction de type « tour à tour » tout en conservant ou réduisant localement le bilan de détection du radar.

Dans le cadre d'un mode de surveillance maritime pour lequel le critère de détection se fait majoritairement (voire uniquement) en présence de forts fouillis de mer, i.e. pour des distances proches du radar, l'augmentation du bilan radar par traitement cohérent n'est pas une solution appropriée pour améliorer la détection de cibles contrairement au cas de présence uniquement de bruit thermique.

Dans ce cadre, opter pour une grande largeur d'impulsion afin d'augmenter le gain de compression d'impulsion ou opter pour un temps d'observation plus long pour augmenter le gain de traitement Doppler en mode Doppler, n'est pas nécessairement une stratégie avantageuse.

Lorsque le rapport fouillis à bruit (appelé *RFB*) est très élevé, par exemple à courte distance, la détection de petites cibles maritimes est gênée par la présence de pics (appelés également par le terme anglais *spikes*), c'est-à-dire des échos de fouillis d'une forte surface radar équivalente (appelée également SER de l'anglais « Surface Equivalent Radar ») vis-à-vis d'une surface radar équivalente moyenne du fouillis local. Les vagues peuvent être à l'origine d'un tel phénomène par exemple.

Pour différencier une cible d'un *spike,* qui n'ont pas le même temps de corrélation, des traitements « tour à tour » (ou scan à scan) de type extracteur voire filtrage cinématique sont généralement employés pour extraire dans le temps les contributions des cibles et des *spikes* alentours.

On suppose pour cela que les *spikes* vont « s'effondrer » en puissance plus rapidement que le temps de cohérence des cibles supposé plus élevé. C'est pour cette raison que des extracteurs de type « K/N » sont généralement employés pour filtrer les fausses alarmes liées aux *spikes.*

Cependant, ces traitements de type « tour à tour » supposent que les contributions de *spikes* dans une macro-cellule de type « distance-azimut » ne sont pas remplacées par d'autres contributions. Or, sur conditions de fouillis atypiques ce n'est pas toujours le cas : pour de fortes vitesses de vagues, de nouvelles contributions physiques peuvent migrer et remplacer les précédentes mettant à mal les traitement d'extraction.

La présente invention a pour but de remédier à ce problème et d'améliorer la qualité de détection de cibles maritimes même sous les conditions de fouillis atypiques.

À cet effet, l'invention a pour objectif un procédé de fonctionnement d'un radar de détection de cibles en mode de surveillance maritime, le radar de détection mettant en œuvre un balayage dans une pluralité de secteurs géographiques ;

le procédé comprenant une étape de détermination d'un niveau de fausses alarmes dans chaque secteur géographique ;
le procédé comprenant en outre pour chaque secteur géographique, la mise en œuvre de plusieurs récurrences d'une étape d'émission/réception de signaux d'un type choisi parmi des ondes simples et des ondes communalisées, en fonction du niveau de fausses alarmes déterminé pour au moins l'un des secteurs géographiques ;
chaque onde communalisée comprenant au moins deux impulsions consécutives associées à des directions d'émission différentes et/ou à des fréquences différentes, et émises dans des bandes fréquentielles différentes ;
chaque onde simple comprenant une seule impulsion.

Suivant d'autres aspects avantageux de l'invention, le procédé comprend une ou plusieurs des caractéristiques suivantes, prises isolément ou suivant toutes les combinaisons techniquement possibles :

- les ondes communalisées sont choisies dans un secteur géographique lorsque le niveau de fausses alarmes dans au moins l'un des secteurs géographiques est supérieur à un seuil prédéterminé ;
- le procédé comprenant en outre une étape d'adaptation en fonction du niveau de fausses alarmes dans au moins l'un des secteurs géographiques d'au moins l'un des paramètres choisis dans le groupe comprenant :

    - un temps d'observation de chaque position de pointage comprise dans ce secteur géographique ou dans un autre secteur géographique ;
    - un seuil d'extraction des cibles dans ce secteur géographique ;
    - un nombre d'impulsions émises dans chaque onde communalisée dans ce secteur géographique ou dans un autre secteur géographique ;

- le secteur géographique dans lequel les ondes communalisées sont choisies, est choisi de manière aléatoire ou selon une règle prédéterminée, parmi l'ensemble des secteurs géographiques dont le nombre de fausses alarmes n'a pas dépassé le seuil ;

- chaque secteur géographique correspond à un cadran décrivant le fouillis de mer en fonction du vent ;
- chaque cadran correspond à un domaine de type « sous le vent », « contre le vent » et « vent de travers » ;
- une fausse alarme est déterminée en appliquant un critère de densité de cibles par zone et/ou en analysant le nombre de cibles dans une zone selon des données externes ;
- le procédé comprenant en outre une étape d'analyse des échos de signaux reçus comprenant un traitement d'extraction de type « tour à tour » ;
- chaque n-ième récurrence de l'étape d'émission/réception des ondes communalisées comprend les sous-étapes suivantes :

  + génération d'au moins deux impulsions consécutives associées à des directions d'émission différentes et/ou à des fréquences différentes ;
  + émission des impulsions dans des bandes fréquentielles différentes ;
  + réception dans une fenêtre temporelle commune des échos des impulsions ;

- chaque impulsion est émise avec une phase aléatoire associée à la bande fréquentielle correspondante ;
- la sous-étape de la réception comprend la compensation du déphasage des échos reçus dans chaque bande fréquentielle, par la phase aléatoire associée à cette bande fréquentielle ;
- lors de la sous-étape d'émission, les impulsions correspondantes sont émises en utilisant des pentes différentes de chirps utilisés pour les émettre ;
- lors de la sous-étape de réception, des échos associés à des directions d'émission et/ou à des fréquences différentes sont distingués en déterminant les pentes des chirps correspondants ;
- lors de la sous-étape d'émission, les impulsions correspondantes sont émises en utilisant des polarisations différentes ;
- lors de la sous-étape de réception, des échos associés à des directions d'émission et/ou à des fréquences différentes sont distingués en déterminant leurs polarisations ;
- une polarisation est émise pour chaque impulsion ou un ensemble de polarisations formant une signature est émise pour chaque impulsion.

L'invention a également pour objet un radar de détection de cibles comprenant des moyens techniques configurés pour mettre en œuvre le procédé tel que défini ci-dessus.

L'invention apparaîtra plus clairement à la lecture de la description qui va suivre, donnée uniquement à titre d'exemple non limitatif, et faite en référence aux dessins dans lesquels :

- [Fig. 1] la figure 1 est une vue schématique d'un radar de détection selon l'invention ;
- [Fig. 2] la figure 2 est un organigramme d'un procédé de fonctionnement du radar de la figure 1 ;
- [Fig. 3] [Fig. 4] les figures 3 et 4 sont différentes vues illustrant la mise en œuvre du procédé de la figure 2.

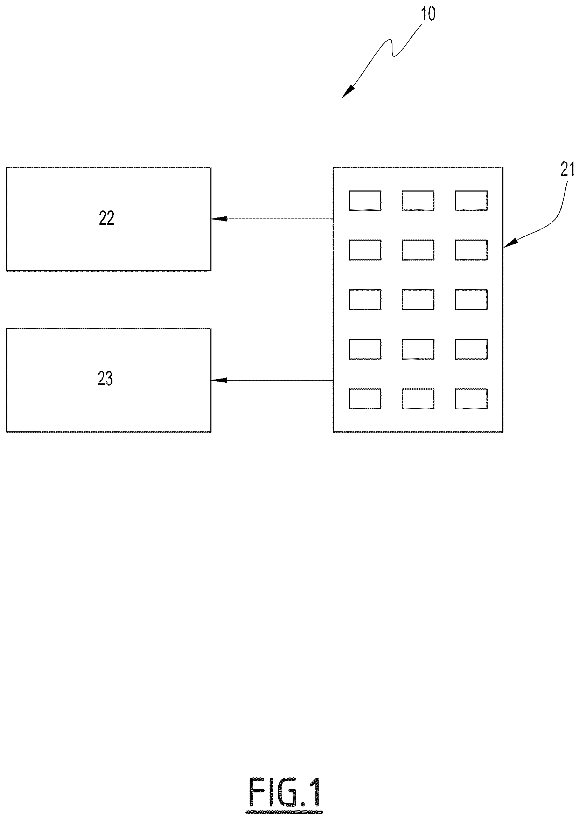

La figure 1 illustre un radar de détection 10 selon l'invention. Ce radar 10 est destiné par exemple à être embarqué sur un porteur mobile se déplaçant dans l'air et/ou sur une surface terrestre et/ou sur une surface maritime. Avantageusement, le radar 10 est destiné à être embarqué sur un porteur se déplaçant dans l'air, tel qu'un aéronef. Alternativement, le radar 10 est disposé de manière fixe.

Le radar 10 permet de détecter des cibles suivant un mode de surveillance maritime, par exemple un mode Doppler de type MMTI (de l'anglais « Maritime Moving Target Indicator ») ou un mode non-Doppler.

En référence à la figure 1, le radar 10 comprend un réseau d'antennes élémentaires 21 permettant d'émettre des signaux sous la forme d'impulsions et de recevoir des signaux correspondant à des échos de ces impulsions.

Le radar 10 comprend en outre une unité d'émission 22 permettant de générer les impulsions à émettre par le réseau d'antennes 21 et une unité de réception 23 permettant de traiter les échos reçus par le réseau d'antennes 21 afin d'en déduire la présence d'une cible et éventuellement, une vitesse et une distance jusqu'à cette cible.

Chacune des unités 22, 23 est réalisée par exemple sous la forme d'un circuit programmable de type FPGA (de l'anglais « Field Programmable Gate Array ») et/ou de type ASIC (de l'anglais « Application-Specific Integrated Circuit »). En complément ou en variante, chacune de ces unités 22, 23 est réalisée au moins partiellement sous la forme d'un logiciel exécutable par un processeur et stocké dans une mémoire.

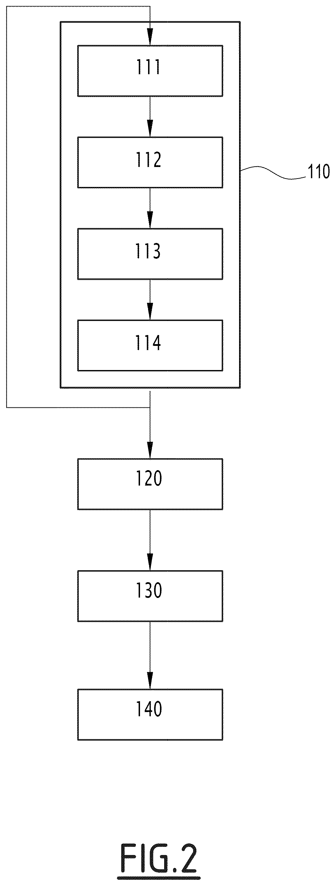

Le procédé de fonctionnement du radar 10 sera désormais expliqué en référence à la figure 2 présentant un organigramme de ses étapes.

Il est considéré que ce procédé est mis en œuvre lors d'un balayage électronique de l'espace autour du radar 10. En particulier, ce procédé comprend la mise en œuvre itérative au moins des étapes 110 et 120 décrites ci-dessous pour chaque position de pointage du radar 10. Chaque itération de ces étapes est appelée récurrence.

Il est considéré en outre que les positions de pointage se succèdent selon un sens de rotation prédéterminé et définissent toutes une ouverture angulaire dépendante de l'angle de dépointage connue de l'homme de l'art. L'ensemble des positions de pointage couvrent tout le cône de visibilité disponible du système radar. Sans que ce soit limitatif pour l'invention, ce cône forme par exemple un tour de 360°. En outre, un temps d'observation Tr(i) est défini pour chaque position de pointage. Ce temps d'observation correspond au temps de prise de mesures dans la position de pointage correspondant.

Le temps s'écoulant entre deux prises de mesures successives dans une même position de pointage est appelé temps de rafraichissement $T_{raf}$.

Le calcul de ce temps de rafraichissement $T_{raf}$ dépend du mode choisi pour le radar 10.

En particulier, pour un mode non-Doppler :

$$T_{raf} = \sum_{i=1}^{Nb_p} Nb_{fe}(i) \times Tr(i)$$

où

$Nb_{fe}(i)$ est le nombre de fréquences différentes devant être émises dans une direction de pointage pour effectuer une intégration non-cohérente (moyenne en puissance) ;
$Nb_p(i)$ est le nombre de pointages.

Pour un mode Doppler, la formule précédente prend la forme suivante :

$$T_{raf} = \sum_{i=1}^{Nb_p} Nb_{fe}(i) \times N_{rec}(i) \times Tr(i)$$

où

$N_{rec}(i)$ est le nombre de récurrences traitées de manière cohérente pour une même fréquence.

Chaque position de pointage appartient à un secteur géographique défini en fonction du milieu dans lequel opère le radar 10. Par exemple, quatre secteurs, appelés alors cardans, peuvent être déterminés autour du radar 10 en fonction du vent. Chaque secteur peut ainsi correspondre à une zone géographique de type « sous le vent », « contre le vent » et « vent de travers ». Alternativement, les secteurs géographiques sont définis de manière plus raffinée et éventuellement irrégulière. Leur nombre peut ainsi être strictement supérieur à 4. De manière générale, le nombre de secteurs géographiques est supérieur ou égal à 1.

Avantageusement, une pluralité de positions de pointage successives correspond à un même secteur.

Chaque n-ième récurrence de l'étape 110 comprend une émission/réception de signaux dans la position de pointage correspondante.

En particulier, lors de cette étape, l'unité d'émission 22 du radar 10 émet des signaux dans un cône défini par la position de pointage et l'unité de réception 23 reçoit des échos de ces signaux.

Cette étape 110 d'émission/réception de signaux comprend plusieurs sous-étapes dont la mise en œuvre dépend du type de signaux choisi. Ces sous-étapes seront expliquées en détail par la suite. Cette étape 110 comprend également un filtrage et un traitement de détection, comme cela sera expliqué par la suite.

Lors de chaque n-ième récurrence de l'étape suivante 120, le radar 10 et notamment l'unité de réception 23 de celui-ci mettent en œuvre une analyse des signaux reçus. En particulier, cette étape 120 comprend un traitement d'extraction de type « tour à tour » permettant d'identifier des cibles maritimes.

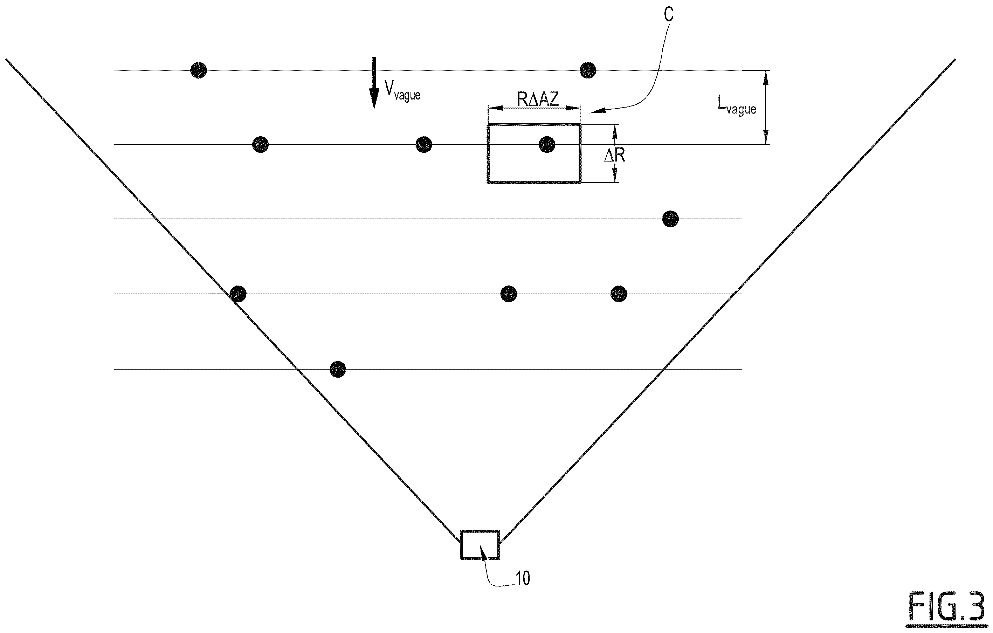

De manière connue en soi, un tel traitement est effectué en considérant une pluralité de macro-cellules susceptibles de contenir une cible maritime. Un exemple d'une telle macro-cellule C est illustré sur la figure 3.

En particulier, cette figure 3 illustre une disposition d'un panneau antennaire du radar 10 face à des fronts de vague illustrés sur cette figure par des lignes horizontales. L'ensemble des vagues forment un train de vagues se déplaçant selon la vitesse $V_{vague}$ et ayant un écart $L_{vague}$ entre les vagues. Sur la figure, la macro-cellule C est de taille ($\Delta R$, $R\Delta Az$) où les valeurs $\Delta R$ et $R\Delta Az$ correspondent à des résolutions de traitement respectivement en distance et en azimut. Le traitement d'extraction relatif à cette macro-cellule est de durée $NxT_{raf}$ où $T_{raf}$ correspond au temps de rafraichissement supposé constant entre deux mesures et N correspond au nombre de mesures, c'est-à-dire au nombre de mises en œuvre de l'étape 110 dans la même position de pointage.

Une cible maritime est considérée comme détectée lorsqu'à l'issue de l'analyse de la macro-cellule C, le radar 10 conclut qu'une telle cible est présente dans la macro-cellule.

Une cible maritime est considérée comme définitivement détectée lorsqu'après plusieurs mises en œuvre des étapes 110 et 120, au moins K détections sont présentes et corrèlent dans une même macro-cellule sur un horizon de N mises en œuvre de ces étapes. Dans cette notation, le nombre K signifie le nombre d'étapes 120 lors desquelles la cible était considérée comme détectée. Le coefficient K/N peut être alors comparé avec un seuil qui est appelé seuil d'extraction des cibles.

Lors d'une étape 130 suivante mise en œuvre au moins une fois par tour du radar 10, le radar 10 détermine le niveau de fausses alarmes générées dans chaque secteur géographique. En particulier, par « fausse alarme », on entend tout plot sorti des traitements de détection et d'extraction, qui n'est pas issu d'une cible utile du point de vue de l'opérateur radar (par exemple pic de bruit, spikes de fouillis, etc.).

Pour cela, le radar 10 vérifie en utilisant un traitement complémentaire autre que celui mis en œuvre lors de l'étape 120 que chaque détection extraite corresponde en effet à une cible d'intérêt présente dans le secteur correspondant.

Ce traitement complémentaire peut comprendre la mise en œuvre d'un critère de densité de cibles par zone (distance, azimut) ou encore une comparaison d'un nombre d'engins maritimes sur place déclarés par un système automatique d'identification de type « *AIS* » (de l'anglais *Automatic Identification System*) en regard de la densité de plots du radar.

Une détection est confirmée lorsque ce traitement complémentaire confirme la présence d'une cible d'intérêt et est considérée une fausse alarme autrement.

Lors d'une étape 140 suivante mise en œuvre au moins une fois par tour, le radar 10 compare pour chaque secteur le nombre de fausses alarmes avec un seuil prédéterminé.

Lorsque ce nombre est inférieur au seuil pour tous les secteurs, la prochaine récurrence des étapes 110 et 120 en relation avec le prochain secteur est mise en œuvre avec les mêmes paramètres que précédemment.

Autrement, si pour au moins l'un des secteurs le seuil est dépassé, les paramètres sont réajustés sur au moins un des pointages à réaliser pour effectuer un tour complet.

Ce réajustement vise principalement à réduire le temps de rafraichissement $T_{raf}$.

En effet, comme indiqué précédemment, un ensemble de fausses alarmes peuvent être principalement dues au phénomène stroboscopique des vagues lors du traitement d'extraction mis en œuvre lors de l'étape 120.

Pour éviter un tel phénomène, un front de vague ne doit pas remplacer le suivant dans une même macrocellule. Cela est vrai lorsque les deux conditions suivantes sont vérifiées :

1) Il n'y a au maximum qu'un seul front de vague par macro-cellule : $\Delta R < L_{vague}$

2) Le déplacement d'un front de vague n'excède pas l'écart entre deux fronts : $V_{vague} \times N \times T_{raf} < L_{vague}$

La condition 2) est à reproduire pour les différents angles de vue $\alpha$, elle est à considérer en termes de vitesse radiale vis-à-vis du radar 10, soit remplacer $V_{vague}$ par sa projection $V_{vague} \cos(\alpha) < V_{vague}$

Une solution consistant à réduire $\Delta R$ permet de répondre à la première condition mais pas à la seconde. De plus, cette réduction de $\Delta R$ diminue également la vitesse maximale observable des cibles. En outre, en pratique, $L_{vague}$ et $V_{vague}$ ne sont pas connues et sur fouillis atypique pour de forte vitesse de vague et une petite longueur d'onde. Ainsi, pour pouvoir vérifier la deuxième condition, le temps de rafraichissement $T_{raf}$ doit être diminué.

Ainsi, selon un premier mode de réalisation, lors de l'étape 140, le radar 10 diminue les temps d'observation de l'ensemble des pointages d'au moins un secteur. Cela diminue le temps de rafraichissement $T_{raf}$ du tour complet.

Cela est possible par exemple en accélérant le balayage électronique mis en œuvre par le radar 10, i.e. en diminuant le nombre de récurrences émises dans une direction.

Le choix du secteur dans lequel les temps d'observation doivent être diminués peut être effectué selon différents exemples de réalisation.

Selon un premier exemple, le secteur choisi est celui dans lequel le nombre de fausses alarmes a dépassé le seuil.

Selon un deuxième exemple, au contraire, un tel secteur est choisi au moins initialement par exemple de manière aléatoire et selon une règle prédéterminée parmi l'ensemble des secteurs dont le nombre de fausses alarmes n'a pas dépassé le seuil.

Puis, le principe « essai/erreur » peut être appliqué lors des itérations suivantes du procédé pour confirmer ou modifier ce choix.

Par exemple, lorsque ce choix a permis de diminuer le nombre de fausses alarmes dans le secteur correspondant, le choix du même secteur peut être gardé pour une itération suivante des étapes du procédé.

Lorsqu'au contraire, ce choix n'a pas permis de diminuer le nombre de fausses alarmes, un autre secteur est choisi lors d'une itération suivante des étapes du procédé.

Alternativement ou optionnellement, le radar adapte le seuil d'extraction des cibles pour au moins un secteur donné pour diminuer le nombre de fausses alarmes. Ici, il peut s'agir du secteur dont le nombre de fausses alarmes a dépassé le seuil.

Selon un deuxième mode de réalisation, combinable avec le premier mode de réalisation, le radar 10 adapte le type de signaux émis/reçu lors de l'étape 110.

En particulier, il est considéré initialement que les signaux émis/reçus lors de l'étape 110 sont de type dit onde simple.

Dans un tel cas, cette étape 110 comprend une sous-étape 111 de génération d'une impulsion, une sous-étape 112 d'émission de cette impulsion dans une bande fréquentielle prédéterminée, une sous-étape 113 de réception d'un écho de cette impulsion dans une fenêtre temporelle de durée prédéterminée et une sous-étape 114 de prétraitement des échos reçus comprenant par exemple un filtrage adapté et un traitement de détection adapté (par exemple en puissance ou en contraste).

Lorsque le niveau de fausses alarmes est trop élevé dans un secteur, le radar 10 modifie le type de signaux émis/reçus lors de l'étape 110 pour le type dit onde communalisée au moins dans un secteur. Le choix d'un tel secteur peut être effectué selon le même principe que celui décrit précédemment. En particulier, ce secteur choisi peut correspondre au secteur ayant le niveau de fausses alarmes supérieur au seuil ou au contraire, à un secteur choisi de manière aléatoire ou selon une règle prédéterminée parmi l'ensemble des secteurs dont le nombre de fausses alarmes n'a pas dépassé le seuil. Le principe « essai/erreur » peut également être appliqué pour les itérations suivantes.

Chaque onde communalisée comprend au moins deux impulsions consécutives associées à des directions d'émission différentes et/ou à des fréquences différentes, et émises dans des bandes fréquentielles différentes. Avantageusement, l'onde communalisée permet d'accélérer le balayage électronique sans modifier le nombre de récurrences transmises dans une direction.

Dans un tel cas, lors de la sous-étape 111, l'unité d'émission 22 du radar 10 génère deux impulsions consécutives associées à des fréquences différentes ou à des directions d'émission différentes.

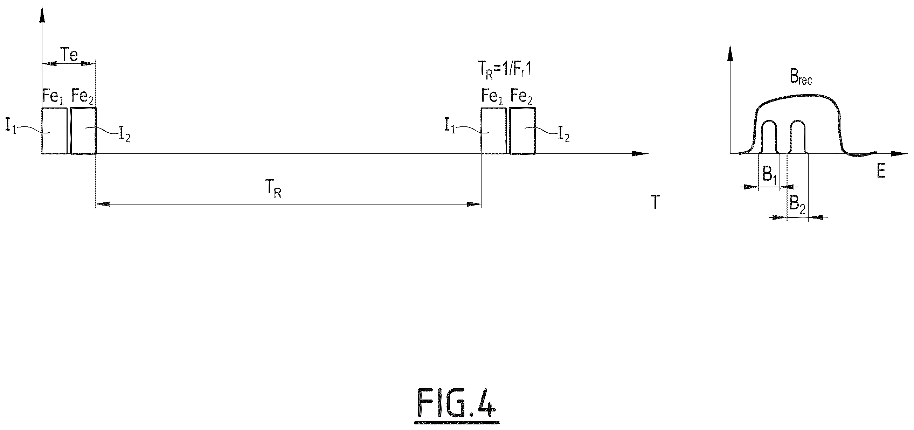

En particulier, lors de cette sous-étape, l'unité d'émission 22 génère une première impulsion $I_1$ et une deuxième impulsion $I_2$, illustrées sur la figure 4.

Chaque impulsion est associée à une fréquence particulière ou à une direction d'émission particulière. Cette direction d'émission peut être définie par exemple par un couple de valeurs angulaires. Ces valeurs angulaires correspondent par exemple à l'élévation (ou site) et à l'azimut d'émission, dénotées par la suite respectivement par $El_i$ et $Az_i$. Dans tout ce qui suit, l'indice i=1 désigne toute valeur relative à la première impulsion et i=2 désigne toute valeur relative à la deuxième impulsion.

Les impulsions sont générées dans une fenêtre d'émission Te dans laquelle chaque impulsion a une largeur Li et espacée de l'autre impulsion et de l'une des frontières de la fenêtre d'émission Te par un écart temporel $T_{GAP}$.

Dans le domaine fréquentiel, les impulsions partagent un même support fréquentiel $B_{rec}$, avec un écart fréquentiel $F_{GAP}$ entre les porteuses Fi correspondantes supérieur aux bandes fréquentielles Bi de ces impulsions. L'écart fréquentiel $F_{GAP}$ est choisi suffisant pour distinguer les échos de ces impulsions à la réception. Dans tout ce qui suit, une bande fréquentielle est définie par une fréquence centrale et une largeur de bande. Avantageusement, dans la suite, toutes les bandes fréquentielles présentent une même largeur. En outre, l'écart fréquentiel $F_{GAP}$ est mesuré entre un couple de fréquences centrales correspondantes et est supérieur à la largeur de chaque bande fréquentielle.

Les bandes fréquentielles $B_1$ et $B_2$ respectivement de la première impulsion $I_1$ et de la deuxième impulsion $I_2$ sont avantageusement choisies les mêmes pour chaque récurrence de l'étape 110. Ainsi, la même fréquence centrale $Fe_1$ et la même fréquence centrale $Fe_2$ sont choisies respectivement pour la première impulsion et pour la deuxième impulsion dans chaque récurrence de l'étape 110.

Lors de la sous-étape 112, l'unité d'émission 22 émet les impulsions générées lors de la sous-étape précédente dans les bandes fréquentielles correspondantes.

Lors de la sous-étape 113, l'unité de réception 23 reçoit des échos correspondant aux impulsions émises dans une fenêtre temporelle commune de réception. La durée Tr de cette fenêtre commune de réception est égale à la durée totale de la récurrence $T_R$ (c'est-à-dire le temps d'observation du pointage correspondant pour une récurrence, tel que défini précédemment) moins la durée de la fenêtre d'émission Te. Lors de la réception, les échos correspondant aux impulsions différentes sont distingués par ses bandes fréquentielles différentes, en utilisant par exemple des filtres passe-bande. Un filtrage spatial de type FFC peut également être appliqué dans la direction associée à ladite bande.

Bien entendu, le nombre d'impulsions émises lors de la sous-étape 111 peut être supérieur à 2 et peut également présenter un paramètre de réglage lors de l'étape 140 pour le secteur géographique correspondant. Cela permet alors de réduire davantage le temps de rafraichissement. Avantageusement, dans un mode de réalisation, l'onde communalisée utilise le même nombre de récurrences transmises dans une direction par la forme d'onde simple. Cela implique l'emploi du même nombre de post-intégration, voire du même nombre de récurrences pour le traitement Doppler. Au moins deux directions étant jouées en même temps, cela permet de réduire le temps de rafraichissement.

En outre, lorsque par exemple il n'est plus nécessaire de suivre des cibles dans un secteur géographique donné, le radar 10 peut à nouveau réajuster les paramètres utilisés lors des étapes 110 et 120 pour le ou chaque secteur correspondant, en allongeant le temps de rafraichissement. Pour cela, les signaux de type onde simple peuvent alors être utilisés dans ce(s) secteur(s).

Lors de la sous-étape 114, l'unité de réception 23 effectue un prétraitement des échos reçus comprenant par exemple un filtrage adapté et un traitement de détection adapté (par exemple en puissance ou en contraste).

Les résultats d'un tel prétraitement sont utilisés comme des entrées de l'étape 120.

On conçoit alors que le procédé selon l'invention permet d'améliorer la qualité de détection de cibles maritimes même sous les conditions de fouillis atypiques, en réduisant notamment le niveau de fausses alarmes. Cela est fait en adaptant notamment les temps d'observation dans au moins un secteur géographique (et en conséquence le temps de rafraichissement global) et éventuellement d'autres paramètres utilisés pour le traitement des signaux. L'émission de signaux de type onde communalisée est particulièrement avantageuse dans la mesure où elle permet de couvrir plusieurs fréquences et/ou directions à la fois.

Dans certains modes de réalisation, le procédé de fonctionnement tel qu'expliqué précédemment comprend en outre la mise en œuvre d'au moins une technique permettant de séparer, lors de l'émission/réception des ondes communalisées, les échos des impulsions correspondant à des fréquences/directions différentes et/ou de rejeter de la considération de certains échos qui ne sont pas nécessaires ou sont ambigus en distance pour reconstituer une image complète de l'environnement.

Selon une première technique utilisable pour un mode Doppler, lors de la mise en œuvre de la n-ième récurrence de l'étape 110 et notamment lors de la sous-étape de l'émission 112, l'unité d'émission 22 choisit l'une des impulsions, par exemple la première impulsion et ajoute une phase aléatoire $\phi_{in}$ à cette impulsion. Avantageusement, l'unité d'émission 22 ajoute une phase aléatoire différente $\phi_{in}$ à chacune des impulsions. La ou chaque impulsion ayant une phase aléatoire $\phi_{in}$ ajoutée est dite par la suite impulsion déphasée.

Il est à noter que le choix de l'impulsion à déphaser peut rester le même pour chaque récurrence de cette sous-étape 112. Autrement dit, lorsqu'une seule impulsion est déphasée lors de cette sous-étape, la même impulsion est déphasée dans chaque récurrence de cette étape. Lorsque les deux impulsions sont déphasées lors de cette sous-étape, ces impulsions sont également déphasées dans chaque récurrence de cette sous-étape.

Puis, lors de la sous-étape de réception 113, l'unité de réception 23 compense le déphasage des échos reçus dans la bande fréquentielle de la ou de chaque impulsion déphasée, par la phase aléatoire correspondante. Autrement dit, le déphasage s'effectue en faisant une soustraction de la valeur $\phi_{in}$ dans la bande correspondant à l'indice i.

Ainsi, lors du traitement qui suit, seulement les échos correspondant à une direction/fréquence correspondante peuvent être traités de manière cohérente. Le déphasage des autres échos ne peut pas se faire correctement de sorte qu'ils sont considérés comme des bruits blancs.

D'autres techniques pour obtenir une meilleure isolation des échos correspondant à des différentes fréquences/directions lors de leur réception sont également possibles.

Ainsi, selon une deuxième technique utilisable pour les modes Doppler et non-Doppler, lors de la mise en œuvre de la n-ième récurrence de l'étape 110 et notamment lors de la sous-étape de l'émission 112, l'unité d'émission 22 met en œuvre des pentes différentes des chirps utilisés pour émettre les impulsions associées aux fréquences/directions différentes. Autrement dit, lors de cette sous-étape 112, l'unité d'émission 22 émet les impulsions en utilisant soit une pente ascendante soit une pente descendante en fonction de la fréquence/direction associée à chaque impulsion. La même pente est alors utilisée pour toutes les impulsions de ce type dans toutes les récurrences de l'étape 110.

Par exemple, pour toutes les récurrences, une pente ascendante est choisie pour les impulsions associées à une fréquence/direction particulière et une pente descendante est choisie pour les impulsions associées à une autre fréquence/direction particulière.

Puis, lors de la sous-étape de réception 113, l'unité de réception 23 reçoit des échos ayant des pentes fréquentielles différentes. Cette unité de réception 23 détermine donc les pentes reçues (en utilisant notamment des filtres adaptés) afin d'isoler les échos correspondant aux fréquences/directions différentes.

Selon une troisième technique utilisable pour les modes Doppler et non-Doppler et permettant d'obtenir également une meilleure isolation des échos correspondant aux fréquences/directions différentes lors de leur réception, lors de la mise en œuvre de la n-ième récurrence de l'étape 110 et notamment lors de la sous-étape de l'émission 112, l'unité d'émission 22 met en œuvre des polarisations différentes des ondes utilisées pour émettre les impulsions associées aux fréquences/directions différents. Autrement dit, lors de cette sous-étape 112, l'unité d'émission 22 émet l'onde portant chaque impulsion avec une polarisation choisie en fonction de la fréquence/direction associée à cette impulsion. Cette même polarisation est choisie pour ce type d'impulsion pour toutes les récurrences de l'étape 110.

Par exemple, deux polarisations, à savoir une polarisation verticale et une polarisation horizontale peuvent être choisies pour les impulsions émises lors de la sous-étape 112. Selon d'autres exemples, une polarisation à 45° ou en circulaire peut être utilisée.

Puis, lors de la sous-étape de réception 113, l'unité de réception 23 reçoit des échos ayant des polarisations différentes. Cette unité de réception 23 détermine donc les polarisations des échos reçus (en utilisant notamment des filtres adaptés) afin d'isoler les échos correspondant aux fréquences/directions différentes.

Le principe qui vient d'être décrit peut être raffiné en utilisant plusieurs polarisations dans la même impulsion.

Dans un tel cas, chaque impulsion comporte une signature de polarisation spécifique. Une telle signature correspond à un code de polarisation.

Cette technique permet ainsi de colorer les différentes impulsions dans l'espace et d'obtenir une réjection supplémentaire de 20 à 30 dB.

Dans certains modes de réalisation, les techniques précitées sont combinées entre elles pour être mises en œuvre simultanément. En outre, une technique pour lever les ambiguïtés en distance et vitesse et/ou selon au moins une direction de pointage, peut être également utilisée en combinaison avec la deuxième technique ou la troisième technique, telle que décrite ci-dessus.

**Revendications**

1. Procédé de fonctionnement d'un radar de détection (10) de cibles en mode de surveillance maritime, le radar de détection (10) mettant en œuvre un balayage dans une pluralité de secteurs géographiques ;

   le procédé comprenant une étape (140) de détermination d'un niveau de fausses alarmes dans chaque secteur géographique ;

le procédé comprenant en outre pour chaque secteur géographique, la mise en œuvre de plusieurs récurrences d'une étape (110) d'émission/réception de signaux d'un type choisi parmi des ondes simples et des ondes communalisées, en fonction du niveau de fausses alarmes déterminé pour au moins l'un des secteurs géographiques ;

chaque onde communalisée comprenant au moins deux impulsions consécutives associées à des directions d'émission différentes et/ou à des fréquences différentes, et émises dans des bandes fréquentielles différentes ;

chaque onde simple comprenant une seule impulsion.

**2.** Procédé selon la revendication 1, dans lequel les ondes communalisées sont choisies dans un secteur géographique lorsque le niveau de fausses alarmes dans au moins l'un des secteurs géographiques est supérieur à un seuil prédéterminé.

**3.** Procédé selon la revendication 1 ou 2, comprenant en outre une étape (130) d'adaptation en fonction du niveau de fausses alarmes dans au moins l'un des secteurs géographiques d'au moins l'un des paramètres choisis dans le groupe comprenant :

- un temps d'observation de chaque position de pointage comprise dans ce secteur géographique ou dans un autre secteur géographique ;
- un seuil d'extraction des cibles dans ce secteur géographique ;
- un nombre d'impulsions émises dans chaque onde communalisée dans ce secteur géographique ou dans un autre secteur géographique.

**4.** Procédé selon la revendication 2 ou 3, dans lequel le secteur géographique dans lequel les ondes communalisées sont choisies, est choisi de manière aléatoire ou selon une règle prédéterminée, parmi l'ensemble des secteurs géographiques dont le nombre de fausses alarmes n'a pas dépassé le seuil.

**5.** Procédé selon l'une quelconque des revendications précédentes, dans lequel chaque secteur géographique correspond à un cadran décrivant le fouillis de mer en fonction du vent.

**6.** Procédé selon la revendication 5, dans lequel chaque cadran correspond à un domaine de type « sous le vent », « contre le vent » et « vent de travers ».

**7.** Procédé selon l'une quelconque des revendications précédentes, dans lequel une fausse alarme est déterminée en appliquant un critère de densité de cibles par zone et/ou en analysant le nombre de cibles dans une zone selon des données externes.

**8.** Procédé selon l'une quelconque des revendications précédentes, comprenant en outre une étape (120) d'analyse des échos de signaux reçus comprenant un traitement d'extraction de type « tour à tour ».

**9.** Procédé selon l'une quelconque des revendications précédentes, dans lequel chaque n-ième récurrence de l'étape (110) d'émission/réception des ondes communalisées comprend les sous-étapes suivantes :

+ génération (111) d'au moins deux impulsions consécutives associées à des directions d'émission différentes et/ou à des fréquences différentes ;
+ émission (112) des impulsions dans des bandes fréquentielles différentes ;
+ réception (113) dans une fenêtre temporelle commune des échos des impulsions.

**10.** Procédé selon la revendication 9, dans lequel :

- chaque impulsion est émise avec une phase aléatoire associée à la bande fréquentielle correspondante ;
- la sous-étape de la réception (113) comprend la compensation du déphasage des échos reçus dans chaque bande fréquentielle, par la phase aléatoire associée à cette bande fréquentielle.

**11.** Procédé selon l'une quelconque des revendications 9 à 10, dans lequel :

- lors de la sous-étape d'émission (112), les impulsions correspondantes sont émises en utilisant des pentes différentes de chirps utilisés pour les émettre ;
- lors de la sous-étape de réception (113), des échos associés à des directions d'émission et/ou à des fréquences différentes sont distingués en déterminant les pentes des chirps correspondants.

**12.** Procédé selon l'une quelconque des revendications 9 à 11, dans lequel :

- lors de la sous-étape d'émission (112), les impulsions correspondantes sont émises en utilisant des polarisations différentes ;
- lors de la sous-étape de réception (113), des échos associés à des directions d'émission et/ou à des fréquences différentes sont distingués en déterminant leurs polarisations.

**13.** Procédé selon la revendication 12, dans lequel une polarisation est émise pour chaque impulsion ou un ensemble de polarisations formant une signature est émise pour chaque impulsion.

14. Radar (10) de détection de cibles comprenant des moyens techniques (21, 22, 23) configurés pour mettre en œuvre le procédé selon l'une quelconque des revendications précédentes.

# FIG.1

111

112 — 110

113

114

120

130

140

FIG.2

EP 4 733 801 A1

FIG.3

$Te$

$Fe_1$ $Fe_2$

$I_1$ $I_2$

$T_R = 1/F_r 1$

$Fe_1$ $Fe_2$

$I_1$ $I_2$

$T_R$

$T$

$B_{rec}$

$B_1$

$B_2$

$E$

FIG.4

EP 4 733 801 A1

Europäisches
Patentamt

European
Patent Office

Office européen
des brevets

**RAPPORT DE RECHERCHE EUROPEENNE**

Numéro de la demande

**EP 25 21 0664**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | KEMKEMIAN STEPHANE ET AL: "On some cognitive processing for airborne maritime radar", 2017 18TH INTERNATIONAL RADAR SYMPOSIUM (IRS), GERMAN INSTITUTE OF NAVIGATION-DGON, 28 juin 2017 (2017-06-28), pages 1-8, XP033142268, DOI: 10.23919/IRS.2017.8008149 * abrégé; figures 1,4,7 * * page 2, lignes 1-23 * * page 5, lignes 12-24 * ----- | 1-14 | INV. G01S7/41 G01S7/292 G01S13/20 G01S13/22 G01S13/42 G01S13/933 G01S13/24 ADD. G01S13/02 |
| A | US 4 206 463 A (GLASGOW JOHN A [GB]) 3 juin 1980 (1980-06-03) * abrégé; revendication 1; figure 1 * * colonne 3, ligne 28 - ligne 54 * * colonne 4, lignes 53-59 * ----- | 1-14 | |
| A | US 2015/061916 A1 (SINCLAIR ROBERT LONGMUIR [GB]) 5 mars 2015 (2015-03-05) * abrégé; figures 1-4 * * alinéas [0016], [0018], [0029], [0030], [0031], [0035], [0036], [0039] * ----- | 1-14 | DOMAINES TECHNIQUES RECHERCHES (IPC) G01S |

Le présent rapport a été établi pour toutes les revendications

| Lieu de la recherche | Date d'achèvement de la recherche | Examinateur |
|---|---|---|
| Munich | 6 mars 2026 | Mercier, Francois |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

 

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 21 0664

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-03-2026

| Document brevet cité au rapport de recherche | | Date de publication | Membre(s) de la famille de brevet(s) | | Date de publication |
|---|---|---|---|---|---|
| US  4206463 | A | 03-06-1980 | CA | 1131331 A | 07-09-1982 |
| | | | DE | 2804128 A1 | 08-02-1979 |
| | | | FR | 2399672 A1 | 02-03-1979 |
| | | | GB | 1604645 A | 09-12-1981 |
| | | | US | 4206463 A | 03-06-1980 |
| US 2015061916 | A1 | 05-03-2015 | DK | 2834660 T3 | 24-08-2020 |
| | | | EP | 2834660 A1 | 11-02-2015 |
| | | | ES | 2812567 T3 | 17-03-2021 |
| | | | GB | 2500931 A | 09-10-2013 |
| | | | IL | 234959 A | 31-10-2017 |
| | | | PL | 2834660 T3 | 28-12-2020 |
| | | | PT | 2834660 T | 07-09-2020 |
| | | | US | 2015061916 A1 | 05-03-2015 |
| | | | WO | 2013149828 A1 | 10-10-2013 |

EPO FORM P0460

Pour tout renseignement concernant cette annexe : voir Journal Officiel de l'Office européen des brevets, No.12/82